# EUROPÄISCHE PATENTSCHRIFT

(11) **EP 3 626 980 B1**
(45) Veröffentlichungstag und Bekanntmachung des Hinweises auf die Patenterteilung: **28.04.2021**
(21) Anmeldenummer: 19198336.0
(22) Anmeldetag: 19.09.2019
(51) Int. Cl.: F16B 5/02

(54) **ARRETIERBOLZEN MIT ZUSTANDSABFRAGE**
LOCKING BOLT WITH STATE QUERYING
BOULON D'ARRÊT À INTERROGATION D'ÉTAT

(30) Priorität: 21.09.2018 DE 102018216167
(43) Veröffentlichungstag der Anmeldung: 25.03.2020
(73) Patentinhaber: ICG GmbH & Co. KG, 72172 Sulz am Neckar (DE)
(72) Erfinder: SCHWEIZER, Florian, 72355 Schömberg (DE); HIPP, Nathalie, 78054 Villingen-Schwenningen (DE); STOJAKOV, Daniel, 78628 Rottweil (DE)
(74) Vertreter: Kohler Schmid Möbus Patentanwälte

(56) Entgegenhaltungen:
- DE-B3-102017 002 212
- DE-U1- 29 519 311
- US-A- 5 544 992

## Beschreibung

Die Erfindung betrifft einen Arretierbolzen,
umfassend ein Hülsenelement und ein Funktionselement, wobei das Funktionselement ein im Hülsenelement axial verfahrbar geführtes Bolzenelement und ein mit dem Bolzenelement starr verbundenes Griffelement umfasst,
wobei das Funktionselement mittels einer Federeinrichtung in eine Grundposition axial vorgespannt ist, in der das Bolzenelement axial aus dem Hülsenelement herausragt und in der das Griffelement mit einer Anlagefläche an einer Gegenfläche des Hülsenelements anliegt,
und wobei das Funktionselement gegen die Wirkung der Federeinrichtung in eine zurückgezogene Position axial verfahren werden kann, in der das Bolzenelement weniger weit aus dem Hülsenelement axial herausragt oder in das Hülsenelement axial zurückgezogen ist und in der die Anlagefläche von der Gegenfläche abgehoben ist.

Ein solcher Arretierbolzen ist beispielsweise bekannt geworden aus dem Produktdatenblatt "K0338 Arretierbolzen" der Heinrich Kipp Werk KG, Sulz am Neckar, DE, heruntergeladen über www.kipp.com am 18.09.2018.

Das Dokument US 5 544 992 A zeigt einen weiteren Bolzen nach dem Stand der Technik.

Arretierbolzen werden in vielfältiger Weise dazu eingesetzt, um Werkstücke oder Maschinenteile (im Folgenden gemeinsam als "Bauteile" bezeichnet) auf schnelle und einfache Weise zu fixieren, etwa während der Bearbeitung eines Werkstücks oder während des Zusammenbaus (Montage) von mehreren Werkstücken.

Der Arretierbolzen ist dazu meist mit seinem Hülsenelement an einer Maschinenstruktur befestigt, etwa in die Maschinenstruktur eingeschraubt. Im Hülsenelement ist das Funktionselement entlang einer Verfahrachse axial verfahrbar. In der Grundposition blockiert ein Bolzenelement des Funktionselements ein Bauteil, das von einem vorderen Ende des Bolzenelements hintergriffen wird, bezüglich einer Bewegung quer zur Verfahrachse des Bolzenelements (man beachte, dass alternativ auch der Arretierbolzen mit seinem Hülsenelement am Bauteil befestigt sein kann, und mit seinem vorderen Ende eine Maschinenstruktur hintergreift; für diesen Fall gelten die Ausführungen analog). In der zurückgezogenen Position ist der Eingriff des Bolzenelements in das Bauteil aufgehoben, und das Bauteil kann quer zur Verfahrachse des Bolzenelements bewegt werden. Dafür kann der Arretierbolzen von einem Bediener am Griffelement des Funktionselements gegen die Kraft des Federelements zurückgezogen werden. Um ein Bauteil dann wieder mit dem Arretierbolzen zu fixieren, lässt der Bediener das zurückgezogene Griffelement los, so dass das Bolzenelement durch die Federeinrichtung wieder in die Grundposition ausgefahren wird, und in Hintergriff mit dem Bauteil treten kann.

Wird beim Fixieren eines Bauteils mit dem Arretierbolzen das Bauteil nicht richtig platziert, kann es sein, dass das Bolzenelement nicht in Hintergriff mit dem Bauteil kommt, und entsprechend das Bolzenelement nicht wieder voll ausfährt. Das Bauteil ist dann für den nachfolgenden Bearbeitungs- oder Montageprozess, etwa an einer zugehörigen automatisch gesteuerten Maschine oder auch unter Beteiligung von händischen Vorgängen, nicht gesichert, so dass beispielsweise ein als Werkstück ausgebildetes Bauteil verrutschen kann und fehlerhaft bearbeitet wird, oder ein als Maschinenteil ausgebildetes Bauteil während eines nachfolgenden Prozesses sich unkontrolliert bewegen kann und dadurch möglicherweise Bediener gefährdet werden.

Daher ist es wünschenswert, den Zustand eines Arretierbolzens und damit die Sicherung eines Bauteils vor Beginn eines maschinellen oder händischen Prozesses zu überprüfen, um sicherzustellen, dass der maschinelle oder händische Prozess korrekt ablaufen kann.

Bei einem herkömmlichen Arretierbolzen ist es möglich, den Zustand des Arretierbolzens beispielsweise mittels einer Kamera zu überprüfen, die die Position des Griffelements gegenüber dem Hülsenelement bestimmt. Die Installation und der Betrieb eines entsprechenden Kamerasystems oder anderer separater Schaltsysteme ist jedoch teuer und aufwändig.

### Aufgabe der Erfindung

Es ist Aufgabe der Erfindung, einen Arretierbolzen vorzustellen, bei dem auf einfache Weise sichergestellt werden kann, dass ein maschineller oder händischer Prozess korrekt ablaufen kann.

### Beschreibung der Erfindung

Diese Aufgabe wird erfindungsgemäß gelöst durch einen Arretierbolzen der eingangs genannten Art, der dadurch gekennzeichnet ist,
dass der Arretierbolzen eine im Griffelement angeordnete elektronische Messanordnung aufweist, wobei die Messanordnung umfasst
- wenigstens eine Sensoreinrichtung zur Erzeugung eines Messsignals, das von der axialen Position des Funktionselements relativ zum Hülsenelement abhängig ist,
- eine Übertragungseinrichtung zur drahtlosen Übermittlung einer Information über das Messsignal,
- und eine Energiespeichereinrichtung zur Versorgung der Sensoreinrichtung und der Übertragungseinrichtung mit elektrischem Strom.

Mit dem erfindungsgemäßen Arretierbolzen ist es auf einfache Weise möglich, die axiale Position des Funktionselements und damit die axiale Position des Bolzenelements zu überprüfen und diese Information zu nutzen. Der Arretierbolzen selbst umfasst eine elektronische Messanordnung, die mit einer integrierten Sensoreinrichtung ein Messsignal erzeugt, mit dem auf die Position des Funktionselements geschlossen werden kann; die Installation eines externen Messaufbaus (etwa einer Kamera) ist nicht nötig. Eine entsprechende Information über die axiale Position des Funktionselements wird mittels einer integrierten Übertragungseinrichtung drahtlos übermittelt, so dass eine Maschinensteuerung oder eine andere Empfangseinrichtung die Information leicht erhalten kann; insbesondere ist keine Verkabelung zur Übertragung der Information nötig. Schließlich ist auch eine integrierte Energiespeichereinrichtung vorgesehen, so dass der Arretierbolzen auch nicht zum Zwecke der Stromversorgung verkabelt werden muss.

Der erfindungsgemäße Arretierbolzen kann einfach anstelle eines herkömmlichen Arretierbolzens eingesetzt werden, und kann zusätzlich die für einen sicheren Betrieb einer Maschine, an der der Arretierbolzen verwendet wird, notwendigen Informationen betreffend den Arretierzustand des Arretierbolzens zur Verfügung stellen.

Typischerweise weist die Sensoreinrichtung eine elektronische Steuereinrichtung (auch genannt Steuerbauteil), etwa einen IC, und einen Messkreis mit wenigstens einem Messelement (wie einer oder mehreren Kondensator-Elektroden oder einer Spule) auf, das eine abstandsabhängige Wechselwirkung (meist elektrostatisch oder magnetisch) mit dem Hülsenelement hat. Das wenigstens eine Messelement sitzt meist unmittelbar hinter der Anlagefläche (z.B. maximal 2 mm, bevorzugt maximal 1,5 mm, axial von der Anlagefläche entfernt), wird aber vom Gehäuse des Griffelements überdeckt. Die Messanordnung ist bevorzugt allseitig vom Gehäuse des Griffelements umschlossen, so dass die Optik und Haptik des Griffelements gleich ist der Optik und Haptik eines Griffelements eines herkömmlichen Arretierbolzens ohne Messanordnung.

Die drahtlos übermittelte Information über das Messsignal, mit der auf den Zustand (arretiert/nicht oder nicht korrekt arretiert) des Arretierbolzens geschlossen werden kann, wird typischerweise von einer Maschinensteuerung empfangen und ausgewertet, die im Falle einer festgestellten Arretierung den Beginn oder die Fortführung von maschinellen Prozessen (etwa Bearbeitungsprozessen an einem Werkstück) an einer zugehörigen Maschine gestattet, und im Falle einer festgestellten fehlenden oder nicht korrekten Arretierung den Beginn von maschinellen Prozessen (etwa Bearbeitungsprozessen) blockiert oder laufende Prozesse abbricht und eine Fehlermeldung ausgibt. Zudem kann der (korrekte) Zustand des Arretierbolzens bei einem maschinellen Prozess (insbesondere Bearbeitungsprozess) für Zwecke der Qualitätskontrolle dokumentiert, etwa elektronisch gespeichert, werden.

Es ist auch möglich, die die drahtlos übermittelte Information über das Messsignal mit einem Empfangsgerät (etwa einem mobilen Endgerät wie einem Notepad) zu empfangen und einem Arbeiter den aktuellen Zustand (arretiert/nicht oder nicht korrekt arretiert) des Arretierbolzens mitzuteilen, etwa optisch anzuzeigen. Der Arbeiter kann dann beispielsweise bei Feststellung eines nicht korrekt arretierten Arretierbolzens den Sitz eines zu sichernden Bauteils manuell korrigieren, so dass der Arretierbolzen noch einrasten kann. Wenn der Arbeiter einen Bearbeitungs- oder Montageprozess händisch ausführen soll, beginnt der Arbeiter diesen Prozess nur dann, wenn ihm mitgeteilt wurde, dass der Arretierbolzen korrekt arretiert ist.

Das Griffelement ist meist näherungsweise pilzförmig ausgebildet. Typischerweise besteht zumindest ein Gehäuse des Griffelements aus Kunststoff, und das Bolzenelement ist typischerweise aus Metall gefertigt. Das Hülsenelement ist typischerweise auch aus Metall gefertigt.

Anlagefläche und Gegenfläche sind typischerweise parallel zueinander ausgerichtet, so dass sich ein flächiger gegenseitiger Kontakt in der Grundposition ergibt. Anlagefläche und Gegenfläche verlaufen typischerweise ringförmig um das Bolzenelement. Anlagefläche und Gegenfläche können auch mehrteilig, insbesondere mit Stufen, verlaufen. Oft ist für die zurückgezogene Position eine Verrastung eingerichtet, die etwa über eine Drehung des Funktionselements gegen das Hülsenelement erreicht werden kann.

### Bevorzugte Ausführungsformen der Erfindung

Bei einer bevorzugten Ausführungsform des erfindungsgemäßen Arretierbolzens ist vorgesehen, dass die Sensoreinrichtung für eine kapazitive Messung ausgebildet ist und wenigstens eine Elektrode umfasst. Die kapazitive Messung ist stromsparend, platzsparend und baulich einfach einzurichten. Die Elektrode als Messelement ist typischerweise Teil eines Kondensators im Messkreis; als Gegenelektrode für eine solche Elektrode kann das Hülsenelement wirken, wobei der Abstand der Elektroden die Kapazität des gebildeten Kondensators beeinflusst. Das Hülsenelement ist bevorzugt aus Metall gefertigt und kann für bestimmte Anwendungen geerdet werden, insbesondere für kapazitive Messungen mit nur einer Elektrode als Messelement im Griffelement (bzw. nur einem Kondensator im Messkreis).

Bei einer vorteilhaften Weiterbildung dieser Ausführungsform ist die wenigstens eine Elektrode parallel zur Anlagefläche ausgebildet. Dieser Aufbau ist einfach und platzsparend, und ergibt besonders starke Gradienten der Messsignale (als Funktion des axialen Abstands) für eine Abstandsmessung.

Eine andere, besonders bevorzugte Weiterbildung sieht vor, die Sensoreinrichtung wenigstens zwei Elektroden umfasst. Dadurch ist es möglich, die wenigstens zwei Elektroden über das Hülsenelement als "Zwischenteil" zu koppeln, wodurch eine Serienschaltung der von wenigstens zwei Kondensatoren eingerichtet wird, und wobei eine gesamte Kapazität vom Abstand der jeweiligen Elektrode im Griffelement einerseits und der "Gegenelektrode" ausgebildet durch das Hüllelement andererseits abhängt. Die Kapazität dieser Serienschaltung kann sehr genau vermessen werden; insbesondere kommt es zu praktisch keinen Störeinflüssen durch Kapazitätsänderungen durch äußere Berührungen mit der Hand oder dergleichen. Insbesondere braucht das Hülsenelement dann nicht geerdet zu sein. Zudem ist es möglich, mit mehreren Elektroden eine Redundanz bei der Zustandskontrolle zu erreichen, falls gewünscht.

Bei einer anderen Weiterbildung ist vorgesehen, dass die Sensoreinrichtung wenigstens drei Elektroden umfasst. Mit drei oder mehr Elektroden kann auch ein Verkippungsgrad des Funktionselements gegenüber dem Hülsenelement erfasst werden, falls gewünscht; hierbei werden typischerweise voneinander unabhängige Abstandsmessungen an wenigstens drei in Umfangsrichtung verteilten Orten vorgenommen.

Bei einer anderen Ausführungsform ist vorgesehen, dass die Sensoreinrichtung für eine induktive Messung ausgebildet ist und wenigstens eine Spule umfasst. Die Spule als Messelement im Messkreis ist bezüglich ihrer Induktivität von den magnetischen (etwa ferromagnetischen) Eigenschaften der Umgebung abhängig, was für eine Abstandsmessung genutzt werden kann. Die induktive Messung gestattet in vielen Fällen die Gewinnung genauerer Abstandsinformationen; über einen Spulenkern und verwendete Materialien (etwa für den Spulenkern und das Hülsenelement) kann ein gut auswertbarer Messbereich für das Messsignal leicht eingerichtet werden. Zudem besteht weniger Gefahr von Kurzschlüssen als bei kapazitiven Messungen.

Bevorzugt ist eine Weiterbildung dieser Ausführungsform, bei der die Spule mit ihrer Spulenachse senkrecht zur Anlagefläche ausgebildet ist. Dies ist einfach und platzsparend, und ergibt besonders starke Gradienten der Messsignale (als Funktion des axialen Abstands) für eine Abstandsmessung.

Bei einer vorteilhaften Ausführungsform ist das Hülsenelement zumindest in einem Bereich nahe oder umfassend die Gegenfläche aus Metall, insbesondere einem ferromagnetischen Metall, ausgebildet. Mit einem ferromagnetischen Metall (etwa Stahl) kann die Bedämpfung im Falle einer induktiven Messung vergrößert und somit eine gute Messgenauigkeit und Zuverlässigkeit der Messung erreicht werden. Metallische Materialien ermöglichen auch eine gute Messgenauigkeit und Zuverlässigkeit bei einer kapazitiven Messung.

Eine bevorzugte Ausführungsform sieht vor, dass die Energiespeichereinrichtung als eine auswechselbare Batterie ausgebildet ist, und dass das Griffelement einen abnehmbaren Deckel aufweist, der am Griffelement befestigt ist, wobei bei abgenommenem Deckel die Batterie für eine Auswechslung zugänglich ist. Eine Batterie ermöglicht auf kostengünstige und platzsparende Weise eine Energieversorgung für vergleichsweise lange Zeiträume. Unter dem Deckel ist bei einem Arretierbolzen in der Regel ausreichend Platz für eine geeignete Batterie, etwa eine Knopfzelle. Die Batterie kann wieder aufladbar ausgebildet sein.

Bei einer bevorzugten Weiterbildung dieser Ausführungsform ist der Deckel am Griffelement mit einer Clipmechanik befestigt. Dies ist baulich einfach und hält die Batterie auf sichere Weise unter Verschluss. Alternativ ist beispielsweise auch eine Bajonettmechanik möglich, die besonders bedienungsfreundlich ist.

Bevorzugt ist auch eine Ausführungsform, bei der die Anlagefläche und die Gegenfläche senkrecht zur axialen Richtung, in der das Funktionselement gegenüber dem Hülsenelement verfahrbar ist, ausgebildet ist. Dies ist platzsparend und baulich einfach, und ermöglicht zudem eine in axialer Richtung besonders exakte (spielarme) gegenseitige Anlage.

Bei einer vorteilhaften Ausführungsform ist die Information über das Messsignal eine binäre Information. Eine binäre Information ist besonders einfach und schnell zu übertragen, etwa an die Maschinensteuerung. Die binäre Information (arretiert/nicht oder nicht korrekt arretiert) wird typischerweise über einen einfachen Schaltpunkt aus dem Messsignal der Sensoreinrichtung gewonnen. Alternativ kann auch eine quantitativ vom Abstand abhängige Größe (etwa das Messsignal selbst) übertragen werden.

Bevorzugt ist auch eine Ausführungsform, bei der die Übertragungseinrichtung weiterhin dazu ausgebildet ist, eine Information über einen Ladezustand der Energiespeichereinrichtung drahtlos zu übermitteln. Dadurch ist es möglich, eine Erschöpfung des Energievorrats etwa an der Maschinensteuerung rechtzeitig zu erkennen und die Batterie auszutauschen.

Besonders bevorzugt ist vorgesehen, dass die Messanordnung weiterhin wenigstens ein optisches Anzeigeelement, insbesondere eine LED, umfasst, mit dem eine Information über das Messsignal, insbesondere eine binäre Information über das Messsignal, angezeigt werden kann. Dadurch ist es für einen Bediener möglich, auch ohne ein Empfangsgerät, das die drahtlos übermittelten Informationen über das Messsignal von der Übertragungseinrichtung erhält, den Zustand des Arretierbolzens zu erfahren, etwa um unverzüglich die Ausrichtung eines Bauteils, das mit dem Arretierbolzen gesichert werden soll, zu korrigieren.

Bevorzugt ist eine Weiterbildung dieser Ausführungsform, bei der mit dem wenigstens einen optischen Anzeigeelement auch ein Ladezustand der Energiespeichereinrichtung angezeigt werden kann. Dadurch kann ein Bediener rechtzeitig eine erschöpfte Energiespeichereinrichtung am Arretierbolzen erkennen und austauschen.

Weitere Vorteile der Erfindung ergeben sich aus der Beschreibung und der Zeichnung. Ebenso können die vorstehend genannten und die noch weiter ausgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

### Detaillierte Beschreibung der Erfindung und Zeichnung

Die Erfindung ist in der Zeichnung dargestellt und wird anhand von Ausführungsbeispielen näher erläutert. Es zeigen:
- Fig. 1: zeigteinen Längsschnitt durch eine Ausführungsform eines erfindungsgemäßen Arretierbolzens mit kapazitivem Messkreis, in der Grundposition;
- Fig. 2: zeigt den Arretierbolzen von Fig. 1 in einer teilweise längsgeschnittenen Ansicht, in der zurückgezogenen Position;
- Fig. 3: zeigt den Arretierbolzen von Fig. 1 in einem schematischen Querschnitt auf Höhe der Elektroden im Griffelement;
- Fig. 4: zeigt den Arretierbolzen von Fig. 1 in einer schematischen Ansicht von unten;
- Fig. 5: zeigt ein Ersatzschaltbild der elektronischen Messanordnung des Arretierbolzens von Fig. 1;
- Fig. 6: zeigt einen Ausschnitt aus einem Längsschnitt durch eine zweite Ausführungsform eines erfindungsgemäßen Arretierbolzens, mit einem induktiven Messkreis;
- Fig. 7: zeigt eine Aufsicht auf den Arretierbolzen von Fig. 1 bei abgenommenem Deckel;
- Fig. 8: zeigt eine Seitenansicht des Arretierbolzens von Fig. 7;
- Fig. 9: zeigt eine Maschine, hier eine Laserbearbeitungsmaschine, mit einer verfahrbaren Schutztür, die mit einem erfindungsgemäßen Arretierbolzen gesichert werden kann, bei geöffneter Schutztür in Seitenansicht;
- Fig. 10: zeigt die Maschine von Fig. 9 , bei geöffneter Schutztür in Aufsicht;
- Fig. 11: zeigt die Maschine von Fig. 9, bei geschlossener Schutztür in Seitenansicht;
- Fig. 12: zeigt die Maschine von Fig. 9, bei geschlossener Schutztür in Aufsicht;
- Fig. 13: zeigt eine schematische Kennlinie eines kapazitiven Messkreises für die Erfindung;
- Fig. 14: zeigt eine schematische Kennlinie eines induktiven Messkreises für die Erfindung;
- Fig. 15: zeigt eine weitere Ausführungsform eines erfindungsgemäßen Arretierbolzens in einem schematischen Querschnitt auf Höhe der Elektroden im Griffelement ähnlich wie in Fig. 3 dargestellt, jedoch mit drei Elektroden.

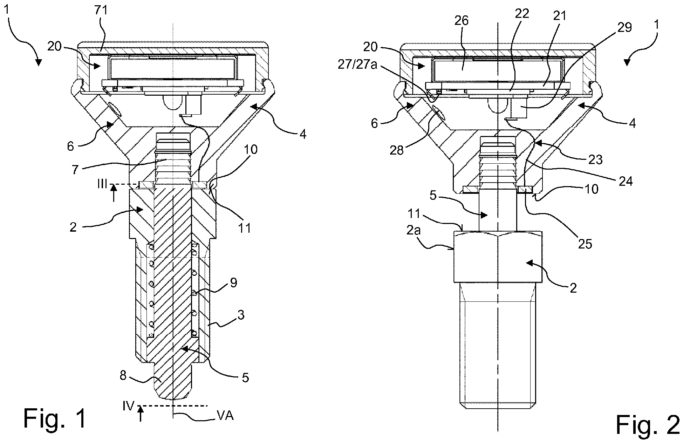

Die **Fig. 1** zeigt einen erfindungsgemäßen Arretierbolzen 1 in einem schematischen Längsschnitt. Der Arretierbolzen 1 umfasst ein Hülsenelement 2, das hier mit einem Außengewinde 3 versehen ist und damit in eine Maschinenstruktur (nicht dargestellt) eingeschraubt werden kann. Im Hülsenelement 2 ist ein Funktionselement 4 axial verfahrbar entlang einer Verfahrachse VA gelagert. Das Funktionselement 4 umfasst hier ein Bolzenelement 5, welches im Hülsenelement 2 geführt ist, und ein Griffelement 6, in welchem das Bolzenelement 5 hinterenends mit einem Rastabschnitt 7 verrastet ist.

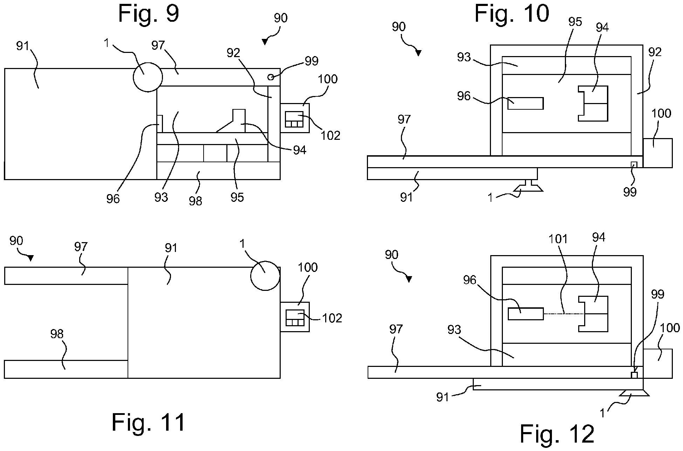

In der in Fig. 1 gezeigten Grundposition ragt ein vorderes Ende 8 des Bolzenelements 5 unten aus dem Hülsenelement 2 heraus, und kann für eine Arretierung eines Bauteils (nicht dargestellt, vgl. aber Fig. 9-12) genutzt werden. Dabei liegt das Funktionselement 4 mit einer Anlagefläche 10 (die hier am Griffelement 6 ausgebildet ist) an einer Gegenfläche 11 des Hülsenelements 2 an; Anlagefläche 10 und Gegenfläche 11 sind hier parallel zueinander und senkrecht zur Verfahrachse VA ausgebildet. Der Arretierbolzen 1 wird durch eine Federeinrichtung 9, die hier als eine Druckfeder ausgebildet ist und an innenliegenden Schultern von Bolzenelement 5 und Hülsenelement 2 angreift, in die Grundposition vorgespannt.

Durch Ziehen des Griffelements 6 in Fig. 1 nach oben kann das vordere Ende 8 des Bolzenelements 5 gegen die Kraft der Federeinrichtung 9 in das Hülsenelement 2 zurückgezogen werden. Die **Fig. 2** zeigt diese zurückgezogene Position des Funktionselements 4, zur Vereinfachung bei nicht geschnittenem Hülsenelement 2. Die Anlagefläche 10 ist in dieser zurückgezogenen Position von der Gegenfläche 11 abgehoben. Bei zurückgezogenem Bolzenelement 5 bzw. zurückgezogenem vorderen Ende des Bolzenelements wird eine vorherige Arretierung des Bauteils gelöst, oder auch eine Positionierung eines anderen Bauteils ermöglicht, so dass es anschließend (durch Herauslassen des Bolzenelements 5 aus dem Hülsenelement 2) arretiert werden kann.

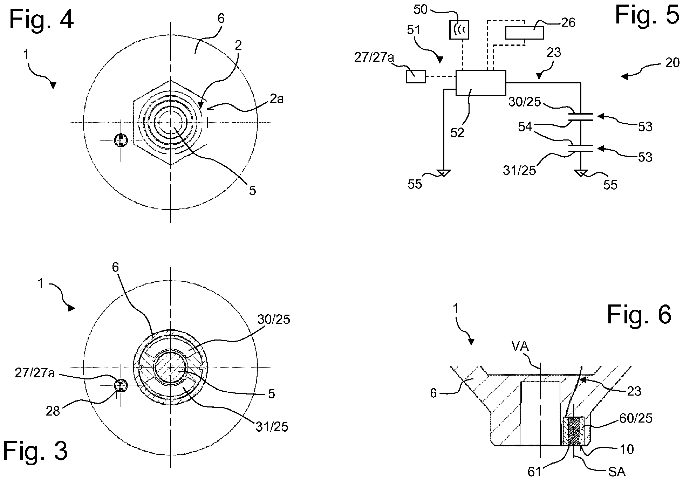

Der Arretierbolzen 1 weist, wie anhand von Fig. 2 näher erläutert wird, eine elektronische Messanordnung 20 auf, die im Griffelement 6 untergebracht ist. Diese ist mit einer Platine 21 ausgebildet, auf der eine Elektronik 22 einschließlich eines integrierten Schaltkreises (IC) aufgebaut ist; diese Elektronik 22 bildet eine elektronische Steuereinrichtung einer Sensoreinrichtung und eine Übertragungseinrichtung aus (nicht näher dargestellt, vgl. aber Fig. 5 hierzu).

An die Steuereinrichtung angeschlossen ist ein Messkreis 23, der eine oder mehrere Leitungen 24 und ein oder mehrere Messelemente 25, hier zwei Elektroden für eine kapazitive Messung, umfasst. Eine Leitung 24 ist hier mit einem Stecker 29 an die Elektronik 22 angeschlossen.

Die Messanordnung 20 umfasst weiterhin eine Energiespeichereinrichtung 26, hier eine Batterie in Firm einer Knopfzelle. Zudem ist in der gezeigten Ausführungsform die Messanordnung 20 auch mit einem optischen Anzeigeelement 27 ausgebildet, hier einer LED 27a, deren Licht an einem Fenster 28 des Griffelements 6 sichtbar ist.

Die **Fig. 3** zeigt einen Querschnitt durch den Arretierbolzen 1 auf Höhe der Messelemente 25, die hier mit zwei Elektroden 30, 31 für eine kapazitive Messung ausgebildet sind, vgl. Ebene III in Fig. 1. Die Elektroden 30, 31 sind hier kreisringabschnittförmig ausgebildet, und liegen um das Bolzenelement 5 herum im Griffelement 6, unmittelbar hinter der Anlagefläche, die hier mit einer isolierenden Kunststoffschicht ausgebildet ist. In der Ansicht von Fig. 3 ist auch das Fenster 28 im Griffelement 6 für die LED 27a gut zu erkennen.

In der in **Fig. 4** dargestellten Ansicht von unten auf den Arretierbolzen 1 (vgl. Ebene IV in Fig. 1) ist der hier hexagonal ausgebildete Bund 2a am Hülsenelement 2 gut zu erkennen, mit dem das Hülsenelement 2 in eine Maschinenstruktur eingeschraubt werden kann, etwa mit einem Maulschlüssel.

Die **Fig. 5** illustriert die im Arretierbolzen von Fig. 1 realisierte elektronische Messanordnung 20 näher. Die Messanordnung 20 umfasst die Sensoreinrichtung 51, die wiederum die elektronische Steuereinrichtung 52 (auch bezeichnet als Messeinheit) und den Messkreis 23 umfasst. Im Messkreis 23 sind die Messelemente 25, also hier die Elektroden 30, 31 für eine kapazitive Messung gegen eine gemeinsame Spannungsreferenz 55 geschaltet. Die Elektroden 30, 31 bilden mit der metallischen Oberfläche der Gegenfläche des Hülsenelements jeweils Kondensatoren 53 aus, wobei die durch die Gegenfläche des Hülsenelements ausgebildeten Elektroden 54 kurzgeschlossen sind. Falls gewünscht, kann das Hülsenelement geerdet werden, wodurch auch die Elektroden 54 geerdet werden; dies ist aber für die Messung im Messkreis 23 nicht wesentlich. Insgesamt bildet also der Messkreis 23 hier (zusammen mit den Elektroden 54 des Hülsenelements) eine Serienschaltung von zwei Kondensatoren 53 aus.

Die Kapazität dieser Kondensatoren 53, gebildet durch die Elektroden 30, 31 im Griffelement und die Elektroden 54 des Hülsenelements im Bereich der Gegenfläche, ist abhängig vom axialen Abstand (entlang der Verfahrachse) dieser Elektroden 30 versus 54 und 31 versus 54. Je geringer der Abstand, desto größer ist die Kapazität. Daher kann aus der gemessenen Kapazität (etwa aus einer Bestimmung des Wechselstromwiderstands im Messkreis 53) auf die relative axiale Position des Funktionselements zum Hülsenelement geschlossen werden.

Die Steuereinrichtung 52 führt in regelmäßigen Abständen eine Messung am Messkreis 23 durch, um die relative axiale Position von Funktionselement und Hülsenelement zu überprüfen, wobei ein Messsignal erhalten wird, und führt typischerweise auch eine Auswertung des Messsignals durch. Das Ergebnis der Auswertung ist hier die Information "Arretierbolzen arretiert" (wenn nach dem Ergebnis der Messung das Funktionselement voll ausgefahren ist, also die Anlagefläche an der Gegenfläche anliegt), oder "Arretierbolzen nicht arretiert" (wenn nach dem Ergebnis der Messung das Funktionselement nicht voll ausgefahren ist, und die Anlagefläche nicht an der Gegenfläche anliegt).

Diese binäre Information über den Arretierzustand wird über die Übertragungseinheit 50 drahtlos abgesandt, etwa per Bluetooth oder allgemein als Funksignal, und kann beispielsweise von einer Maschinensteuerung (nicht näher dargestellt, vgl. aber Fig. 9-12) empfangen und weiterverarbeitet werden. Zusätzlich wird hier die binäre Information über den Arretierzustand auch über das optische Anzeigeelement 27, hier die LED 27a, ausgegeben. Im Zustand "Arretierbolzen nicht arretiert" leuchtet hier die LED 27a rot, anderenfalls leuchtet die LED 27a nicht.

Die Energieversorgung der Messanordnung 20, einschließlich der Sensoreinrichtung 51 und der Übertragungseinrichtung 50, erfolgt durch die Energiespeichereinrichtung 26.

In der vorgestellten Ausführungsform blinkt zudem die LED 27a, wenn die verbleibende Energiemenge der Energiespeichereinrichtung 26 unter einen Grenzwert fällt, was hier die Steuereinrichtung 52 überprüfen kann. Im Falle des Zustands "Arretierbolzen nicht arretiert" wird bei niedrigem Ladestand die rot leuchtende LED 27a jeweils kurz abgeschaltet (also "lang rot", "kurz aus", "lang rot", "kurz aus" und so fort). Im Falle des Zustand "Arretierbolzen arretiert" wird bei niedrigem Ladestand die nicht leuchtende LED 27a jeweils kurz eingeschaltet (also "lang aus", "kurz rot", "lang aus", "kurz rot" uns so fort). Alternativ kann die optische Anzeigeeinrichtung 27 auch beispielsweise mit zwei LEDs ausgebildet sein, wobei eine der LEDs zur Anzeige des Arretierzustands dient, und die andere LED zur Anzeige des Ladezustands der Energiespeichereinrichtung dient.

Die **Fig. 6** zeigt einen schematischen Ausschnitt aus einer zweiten Ausführungsform eines erfindungsgemäßen Arretierbolzens 1, zur Vereinfachung nur im Bereich des Griffelements 6, wobei der Messkreis 23 mit einer Spule 60 als Messelement 25 ausgebildet ist. Durch Messung der Induktivität im Messkreis 23 kann wiederum auf die relative axiale Position von Funktionselement und Hülsenelement geschlossen werden, da die Entfernung der Gegenfläche des Hülsenelements von der Anlagefläche 10 bzw. von der Spule 60 deren Induktivität beeinflusst. Der Messbereich der Spule 60 bzw. des Messkreises 23 im Arretierbolzen 1 kann beispielsweise durch einen geeigneten ferromagnetischen Spulenkern 61 optimiert werden. Die Spulenachse SA ist hier senkrecht zur Anlagefläche 10 bzw. parallel zur Verfahrachse VA ausgebildet.

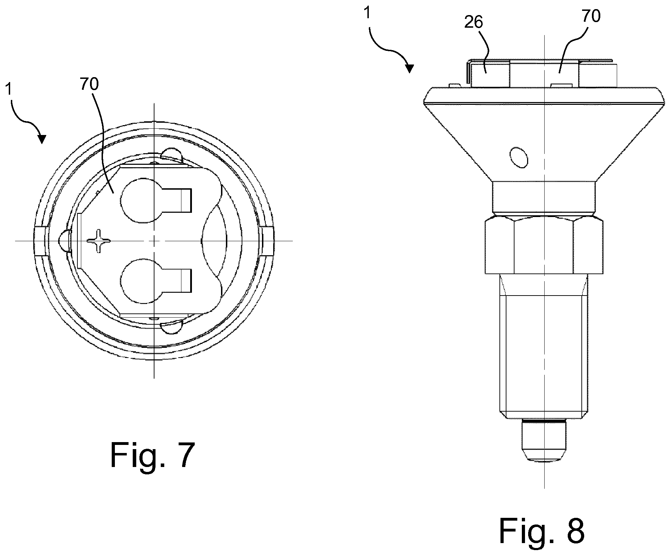

Die **Fig. 7** in Aufsicht und **Fig. 8** in Seitenansicht zeigen für den Arretierbolzen 1 von Fig. 1 eine Halterung für die Energiespeichereinrichtung 26, die hier als eine Batterie vom Typ einer Knopfzelle ausgebildet ist. Aus einem Metallblech ist eine federnde Tasche 70 für die Energiespeichereinrichtung 26 ausgebildet. Bei abgenommenem Deckel (der Deckel ist in Fig. 7 und 8 nicht dargestellt, vgl. aber Fig. 1 für den hier aufclipsbaren Deckel 71) ist die Tasche 70 für einen Batteriewechsel leicht zugänglich.

Die Figuren 9 bis 12 illustrieren eine Anwendung eines erfindungsgemäßen Arretierbolzens an einer Maschine.

In den **Fig. 9** in Seitenansicht und **Fig. 10** in Aufsicht ist die Maschine 90 mit einer geöffneten Schutztür 91 gezeigt, so dass ein Zugang zu einem von einer Wand 92 begrenzten Bearbeitungsraum 93 eröffnet ist. In diesem Zustand kann ein Arbeiter ein zweiteiliges Werkstück 94 auf einem Bearbeitungstisch 95 im Bearbeitungsraum 93 platzieren; das zweiteilige Werkstück 94 soll hier im Bearbeitungsraum 93 mit einem Laser 96 geschweißt werden. Da der Vorgang des Laserschweißens für Arbeiter in der Umgebung gefährlich ist, darf dieser nur bei geschlossener Schutztür 91 ausgeführt werden.

Die Schutztür 91 ist auf Schienen 97, 98 verfahrbar und ist mit einem erfindungsgemäßen Arretierbolzen 1 versehen, wobei das Hülsenelement (nicht näher dargestellt) in der Schutztür 91 befestigt (etwa eingeschraubt) ist; die Schutztür 91 bzw. deren Verfahrposition relativ zur übrigen Maschine 90 soll mit dem Arretierbolzen 1 gesichert werden. Die Schutztür 91 stellt also ein vom Arretierbolzen 1 zu sicherndes Bauteil (hier ein Maschinenteil) dar.

Bei geöffneter Schutztür 91, wie in Fig. 9 und 10 dargestellt, wird das Bolzenelement des Arretierbolzens 1 von der Schiene 97 nach hinten (außen) gedrückt, also der Arretierbolzen 1 in die zurückgezogene Position gezwungen. Der Arretierbolzen 1 ist dann "nicht arretiert".

In der Schiene 97 ist eine Ausnehmung 99 ausgebildet, in die das vordere Ende des Bolzenelements des Arretierbolzens 1 einschnappen kann, wenn die Schutztür 91 geschlossen wird.

Dieser Zustand mit geschlossener Schutztür 91 ist in **Fig. 11** in Seitenansicht und **Fig. 12** in Aufsicht dargestellt. Bei vollständig geschlossener Schutztür 91 ist nun das vordere Ende des Bolzenelements des Arretierbolzens 1 in die Ausnehmung 99 eingeschnappt, wodurch die Schutztür 91 verriegelt ist. Der Arretierbolzens 1 ist durch die Wirkung der Federeinrichtung in die Grundposition gefallen, so dass das Funktionselement des Arretierbolzens 1 nach vorne (innen) ausgerückt ist; entsprechend ist das Griffelement des Arretierbolzens 1 nun an die Schutztür 91 näher herangerückt. Der Arretierbolzen 1 ist dann "arretiert".

Erfindungsgemäß kann der Arretierbolzen 1 die Information "arretiert" oder "nicht arretiert" mit seiner integrierten Messanordnung ermitteln und drahtlos übertragen, hier an eine Maschinensteuerung 100 der Maschine 90. Solange die Maschinensteuerung 100 vom Arretierbolzen 1 die Information erhält, dass der Arretierbolzen 1 "nicht arretiert" ist, sperrt die Maschinensteuerung 100 die Laserbearbeitung am Werkstück 94, um den Arbeiter zu schützen. Sobald die Maschinensteuerung 100 aber vom Arretierbolzen 1 die Information "arretiert" erhält, und daher sichergestellt ist, dass die Schutztür 91 geschlossen ist, gestattet die Maschinensteuerung 100 den Beginn der Laserbearbeitung des Werkstücks 94 im Bearbeitungsraum 93, und aktiviert den Laser 96, der dann einen Laserstrahl 101 auf das Werkstück 94 richtet.

Falls gewünscht, kann an der Maschinensteuerung 100 an einem Display 102 der derzeitige Arretierzustand des Arretierbolzens 1 angezeigt werden, etwa durch Grafiken, die den Arretierbolzen 1 im derzeit festgestellten Zustand zeigen, und/oder durch eine Ampel, mit "grün" für "arretiert" (betriebsbereit) und "rot" für "nicht arretiert" (nicht betriebsbereit). Ebenso kann eine Anzeige des Arretierzustands des Arretierbolzens 1 beispielsweise auf einem mobilen Endgerät (etwa einem Notepad) erfolgen, das die Informationen von der Übertragungseinrichtung des Arretierbolzens 1 oder der Maschinensteuerung 100 erhält. Dadurch kann ein Arbeiter über den Arretierzustand informiert werden, und kann nötigenfalls Korrekturmaßnahmen durchführen, etwa die Schutztür 91 ganz nach rechts fahren, um die Einrastung des Arretierbolzens 1 zu ermöglichen.

Man beachte, dass in anderen Ausführungsformen von Maschinen (die nicht näher illustriert sind) mit einem oder mehreren erfindungsgemäßen Arretierbolzen beispielsweise auch ein Werkstück selbst gehalten werden kann und während einer Bearbeitung gegen Verrutschen gesichert werden kann. In diesem Fall wird die Bearbeitung des Werkstücks von einer Maschinensteuerung nur dann gestattet, wenn alle Arretierbolzen "arretiert" sind, um die korrekte Einspannung bzw. Ausrichtung des Werkstücks für den Bearbeitungsprozess sicherzustellen.

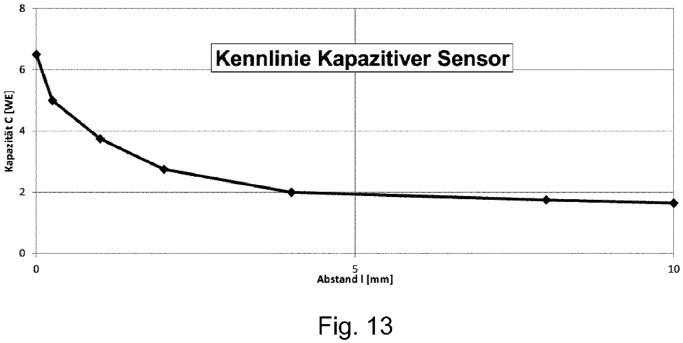

Die **Fig. 13** illustriert für einen erfindungsgemäßen Arretierbolzen wie in Fig. 1 dargestellt schematisch eine Kennlinie, in der die gemessene Kapazität (nach oben aufgetragen) im Messkreis für verschiedene axiale Abstände (nach rechts aufgetragen) von Funktionselement und Hülsenelement (bzw. deren Anlagefläche und Gegenfläche) bestimmt wurde. Die Kapazität ist dabei in willkürlichen Einheiten (WE) angegeben. Im gezeigten Beispiel liegt die Kapazität bei Abstand "null" bei ca. 6,5 WE. Eine typische Auswertung kann dann zum Beispiel bei einer gemessenen Kapazität von 6,2 WE oder weniger annehmen, dass der Arretierbolzen "nicht arretiert" ist, und umgekehrt bei einer gemessenen Kapazität von 6,3 WE oder mehr annehmen, dass der Arretierbolzen "arretiert" ist. Sehr kleine Abweisungen vom erwarteten Wert von 6,5 WE (hier bis 6,3 WE hinunter) im arretierten Zustand sollten außer Betracht bleiben, um systembedingte Messungenauigkeiten und unerhebliche Abstandsvariationen, etwa aufgrund geringfügiger Verschmutzungen, nicht als Fehlarretierung zu interpretieren.

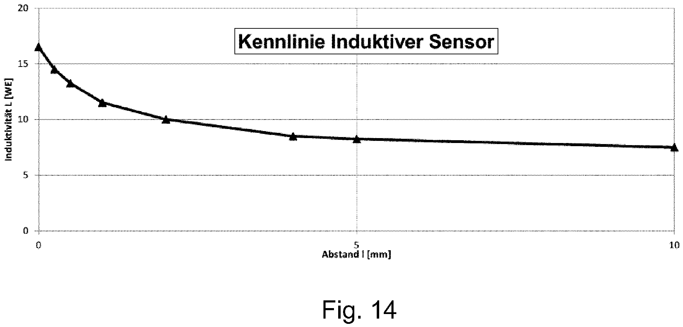

Die **Fig. 14** zeigt eine entsprechende Kennlinie für einen erfindungsgemäßen Arretierbolzen wie unter Fig. 6 vorgestellt, in der die gemessene Induktivität (nach oben aufgetragen) in Messkreis für verschiedene axiale Abstände (nach rechts aufgetragen) bestimmt wurde. Die Induktivität ist wiederum in willkürlichen Einheiten (WE) aufgetragen. Im gezeigten Beispiel liegt die Induktivität bei Abstand "null" bei ca. 16,5 WE. Hier könnte beispielsweise bei einer gemessenen Induktivität von 16,0 WE oder mehr angenommen werden, dass der Arretierbolzen "arretiert" ist, und bei einer gemessenen Induktivität von 15,9 WE oder weniger angenommen werden, dass der Arretierbolzen "nicht arretiert" ist.

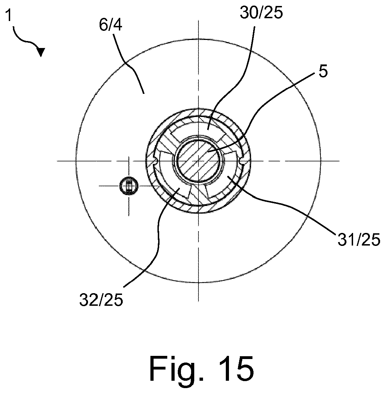

Bei einer in **Fig. 15** illustrierten Ausführungsform des Arretierbolzens 1, die ähnlich zur Ausführungsform von Fig. 3 ausgestaltet ist, so dass nur die wesentlichen Unterschiede hierzu erläutert werden, sind drei Elektroden 30, 31, 32 im Griffelement 6 ausgebildet. Mit den drei kreisringabschnittförmigen Elektroden 30, 31, 32 kann ein Verkippungszustand des Funktionselements 4 gegenüber dem Hülsenelement quantitativ zu erfasst werden. Die Elektroden 30, 31, 32 dienen in diesem Fall als Messelemente 25 in separaten Messkreisen, mit denen jeweils ein lokaler Abstand (am Ort der jeweiligen Elektrode 30, 31, 32) zum Hülsenelement (bzw. der dortigen metallischen Gegenfläche) über eine kapazitive Messung (mit der metallischen Gegenfläche jeweils als Gegen-Elektrode) ermittelt wird. Aus den drei lokalen Abständen kann auf die Verkippungslage geschlossen werden. Das Hülsenelement sollte für diese drei Messungen geerdet sein, und die zugehörige elektronische Steuereinrichtung sollte einen Erdungsanschluss haben.

### Bezugszeichenliste

- 1: Arretierbolzen
- 2: Hülsenelement
- 2a: hexagonaler Bund
- 3: Außengewinde
- 4: Funktionselement
- 5: Bolzenelement
- 6: Griffelement
- 7: Rastabschnitt (Bolzenelement)
- 8: unteres Ende (Bolzenelement)
- 9: Federeinrichtung
- 10: Anlagefläche
- 11: Gegenfläche
- 20: elektronische Messanordnung
- 21: Platine
- 22: Elektronik
- 23: Messkreis
- 24: Leitung
- 25: Messelement
- 26: Energiespeichereinrichtung
- 27: optisches Anzeigeelement
- 27a: LED
- 28: Fenster
- 29: Stecker
- 30: Elektrode (Messelement)
- 31: Elektrode (Messelement)
- 32: Elektrode (Messelement)
- 50: Übertragungseinrichtung
- 51: Sensoreinrichtung
- 52: elektronische Steuereinrichtung
- 53: Kondensator
- 54: Elektrode (Gegenfläche)
- 55: gemeinsame Spannungsreferenz
- 60: Spule
- 61: ferromagnetischer Spulenkern
- 70: Tasche
- 71: Deckel
- 90: Maschine
- 91: Schutztür
- 92: Wand
- 93: Bearbeitungsraum
- 94: Werkstück
- 95: Bearbeitungstisch
- 96: Laser
- 97: Schiene
- 98: Schiene
- 99: Ausnehmung
- 100: Maschinensteuerung
- 101: Laserstrahl
- 102: Anzeige
- SA: Spulenachse
- VA: Verfahrachse / axiale Richtung

## Patentansprüche

1. Arretierbolzen (1),
umfassend ein Hülsenelement (2) und ein Funktionselement (4), wobei das Funktionselement (4) ein im Hülsenelement (2) axial verfahrbar geführtes Bolzenelement (5) und ein mit dem Bolzenelement (5) starr verbundenes Griffelement (6) umfasst,
wobei das Funktionselement (4) mittels einer Federeinrichtung (9) in eine Grundposition axial vorgespannt ist, in der das Bolzenelement (5) axial aus dem Hülsenelement (2) herausragt und in der das Griffelement (6) mit einer Anlagefläche (10) an einer Gegenfläche (11) des Hülsenelements (2) anliegt,
und wobei das Funktionselement (4) gegen die Wirkung der Federeinrichtung (9) in eine zurückgezogene Position axial verfahren werden kann, in der das Bolzenelement (5) weniger weit aus dem Hülsenelement (2) axial herausragt oder in das Hülsenelement (2) axial zurückgezogen ist und in der die Anlagefläche (10) von der Gegenfläche (11) abgehoben ist,
**dadurch gekennzeichnet,**
**dass** der Arretierbolzen (1) eine im Griffelement (6) angeordnete elektronische Messanordnung (20) aufweist, wobei die Messanordnung (20) umfasst
- wenigstens eine Sensoreinrichtung (51) zur Erzeugung eines Messsignals, das von der axialen Position des Funktionselements (4) relativ zum Hülsenelement (2) abhängig ist,
- eine Übertragungseinrichtung (50) zur drahtlosen Übermittlung einer Information über das Messsignal,
- und eine Energiespeichereinrichtung (26) zur Versorgung der Sensoreinrichtung (51) und der Übertragungseinrichtung (50) mit elektrischem Strom.

2. Arretierbolzen (1) nach Anspruch 1, **dadurch gekennzeichnet, dass** die Sensoreinrichtung (51) für eine kapazitive Messung ausgebildet ist und wenigstens eine Elektrode (30, 31, 32) umfasst.

3. Arretierbolzen (1) nach Anspruch 2, **dadurch gekennzeichnet, dass** die wenigstens eine Elektrode (30, 31, 32) parallel zur Anlagefläche (10) ausgebildet ist.

4. Arretierbolzen (1) nach Anspruch 2 oder 3, **dadurch gekennzeichnet, dass** die Sensoreinrichtung (51) wenigstens zwei Elektroden (30, 31, 32) umfasst.

5. Arretierbolzen (1) nach Anspruch 2 oder 3, **dadurch gekennzeichnet, dass** die Sensoreinrichtung (51) wenigstens drei Elektroden (30, 31, 32) umfasst.

6. Arretierbolzen (1) nach Anspruch 1, **dadurch gekennzeichnet, dass** die Sensoreinrichtung (51) für eine induktive Messung ausgebildet ist und wenigstens eine Spule (60) umfasst.

7. Arretierbolzen (1) nach Anspruch 6, **dadurch gekennzeichnet, dass** die Spule (60) mit ihrer Spulenachse (SA) senkrecht zur Anlagefläche (10) ausgebildet ist.

8. Arretierbolzen (1) nach einem der vorhergehenden Ansprüche, **dadurch gekennzeichnet, dass** das Hülsenelement (2) zumindest in einem Bereich nahe oder umfassend die Gegenfläche (11) aus Metall, insbesondere einem ferromagnetischen Metall, ausgebildet ist.

9. Arretierbolzen (1) nach einem der vorhergehenden Ansprüche, **dadurch gekennzeichnet, dass** die Energiespeichereinrichtung (26) als eine auswechselbare Batterie ausgebildet ist, und dass das Griffelement (6) einen abnehmbaren Deckel (71) aufweist, der am Griffelement (6) befestigt ist, wobei bei abgenommenem Deckel (71) die Batterie für eine Auswechslung zugänglich ist.

10. Arretierbolzen (1) nach Anspruch 9, **dadurch gekennzeichnet, dass** der Deckel (71) am Griffelement (6) mit einer Clipmechanik befestigt ist.

11. Arretierbolzen (1) nach einem der vorhergehenden Ansprüche, **dadurch gekennzeichnet, dass** die Anlagefläche (10) und die Gegenfläche (11) senkrecht zur axialen Richtung (VA), in der das Funktionselement (4) gegenüber dem Hülsenelement (2) verfahrbar ist, ausgebildet ist.

12. Arretierbolzen (1) nach einem der vorhergehenden Ansprüche, **dadurch gekennzeichnet, dass** die Information über das Messsignal eine binäre Information ist.

13. Arretierbolzen (1) nach einem der vorhergehenden Ansprüche, **dadurch gekennzeichnet, dass** die Übertragungseinrichtung (50) weiterhin dazu ausgebildet ist, eine Information über einen Ladezustand der Energiespeichereinrichtung (26) drahtlos zu übermitteln.

14. Arretierbolzen (1) nach einem der vorhergehenden Ansprüche, **dadurch gekennzeichnet, dass** die Messanordnung (20) weiterhin wenigstens ein optisches Anzeigeelement (27), insbesondere eine LED (27a), umfasst, mit dem eine Information über das Messsignal, insbesondere eine binäre Information über das Messsignal, angezeigt werden kann.

15. Arretierbolzen (1) nach Anspruch 14, **dadurch gekennzeichnet, dass** mit dem wenigstens einen optischen Anzeigeelement (27) auch ein Ladezustand der Energiespeichereinrichtung (26) angezeigt werden kann.

## Claims

1. Indexing plunger (1),
comprising a sleeve element (2) and a functional element (4), the functional element (4) comprising a bolt element (5) which is guided in the sleeve element (2) in an axially movable manner and a grip element (6) which is rigidly connected to the bolt element (5), the functional element (4) being axially preloaded, by means of a spring device (9), into a base position in which the bolt element (5) axially protrudes from the sleeve element (2) and in which a contact surface (10) of the grip element (6) rests against a counter surface (11) of the sleeve element (2),
and it being possible for the functional element (4) to be moved axially counter to the action of the spring device (9) into a retracted position in which the bolt element (5) axially protrudes from the sleeve element (2) to a lesser extent or is axially retracted into the sleeve element (2), and in which the contact surface (10) is lifted from the counter surface (11),
**characterized in**
**that** the indexing plunger (1) has an electronic measuring assembly (20) arranged in the grip element (6), the measuring assembly (20) comprising
- at least one sensor device (51) for generating a measurement signal which is dependent on the axial position of the functional element (4) relative to the sleeve element (2),
- a transmission device (50) for wirelessly transmitting information about the measurement signal,
- and an energy storage device (26) for supplying the sensor device (51) and the transmission device (50) with electric current.

2. Indexing plunger (1) according to claim 1, **characterized in that** the sensor device (51) is designed for capacitive measurement and comprises at least one electrode (30, 31, 32).

3. Indexing plunger (1) according to claim 2, **characterized in that** the at least one electrode (30, 31, 32) is formed parallel to the contact surface (10).

4. Indexing plunger (1) according to either claim 2 or claim 3, **characterized in that** the sensor device (51) comprises at least two electrodes (30, 31, 32).

5. Indexing plunger (1) according to either claim 2 or claim 3, **characterized in that** the sensor device (51) comprises at least three electrodes (30, 31, 32).

6. Indexing plunger (1) according to claim 1, **characterized in that** the sensor device (51) is designed for inductive measurement and comprises at least one coil (60).

7. Indexing plunger (1) according to claim 6, **characterized in that** the coil (60) is formed with the coil axis (SA) thereof perpendicular to the contact surface (10).

8. Indexing plunger (1) according to any of the preceding claims, **characterized in that** the sleeve element (2), at least in a region close to or comprising the counter surface (11), is made of metal, in particular a ferromagnetic metal.

9. Indexing plunger (1) according to any of the preceding claims, **characterized in that** the energy storage device (26) is designed as a replaceable battery, and **in that** the grip element (6) has a removable cover (71) which is fastened to the grip element (6), the battery being accessible for replacement when the cover (71) is removed.

10. Indexing plunger (1) according to claim 9, **characterized in that** the cover (71) is fastened to the grip element (6) by means of a clip mechanism.

11. Indexing plunger (1) according to any of the preceding claims, **characterized in that** the contact surface (10) and the counter surface (11) are formed perpendicular to the axial direction (VA), in which the functional element (4) can be moved relative to the sleeve element (2).

12. Indexing plunger (1) according to any of the preceding claims, **characterized in that** the information about the measurement signal is binary information.

13. Indexing plunger (1) according to any of the preceding claims, **characterized in that** the transmission device (50) is further designed to wirelessly transmit information about a state of charge of the energy storage device (26).

14. Indexing plunger (1) according to any of the preceding claims, **characterized in that** the measuring assembly (20) further comprises at least one optical display element (27), in particular an LED (27a), by means of which information about the measurement signal, in particular binary information about the measurement signal, can be displayed.

15. Indexing plunger (1) according to claim 14, **characterized in that** a state of charge of the energy storage device (26) can also be displayed by means of the at least one optical display element (27).

## Revendications

1. Boulon d'arrêt (1)
comprenant un élément (2) formant douille et un élément fonctionnel (4), lequel élément fonctionnel (4) inclut un élément (5) formant fût, guidé à déplacement axial dans ledit élément (2) formant douille, et un élément de préhension (6) relié rigidement audit élément (5) formant fût,
sachant que l'élément fonctionnel (4) est précontraint axialement, au moyen d'un dispositif à ressort (9), vers un emplacement de base auquel l'élément (5) formant fût fait saillie axialement au-delà de l'élément (2) formant douille, et auquel l'élément de préhension (6) est en applique, par une surface de contact (10), contre une surface complémentaire (11) dudit élément (2) formant douille,
et sachant que ledit élément fonctionnel (4) peut être déplacé axialement, en opposition à l'action du dispositif à ressort (9), vers un emplacement rétracté auquel l'élément (5) formant fût fait saillie axialement d'une distance moindre, au-delà de l'élément (2) formant douille, ou est rétracté axialement dans ledit élément (2) formant douille, et auquel la surface de contact (10) est soulevée à l'écart de la surface complémentaire (11),
**caractérisé par le fait**
**que** ledit boulon d'arrêt (1) est pourvu d'un ensemble de mesure (20) électronique, logé dans l'élément de préhension (6), lequel ensemble de mesure (20) inclut
- au moins un dispositif de détection (51), conçu pour engendrer un signal de mesure tributaire de l'emplacement axial occupé par l'élément fonctionnel (4) par rapport à l'élément (2) formant douille,
- un dispositif de transmission (50), affecté au transfert sans fil d'une information relative audit signal de mesure,
- et un dispositif (26) de stockage d'énergie, dévolu à l'alimentation en courant électrique dudit dispositif de détection (51) et dudit dispositif de transmission (50).

2. Boulon d'arrêt (1) selon la revendication 1, **caractérisé par le fait que** le dispositif de détection (51) est conçu pour une mesure capacitive, et inclut au moins une électrode (30, 31, 32).

3. Boulon d'arrêt (1) selon la revendication 2, **caractérisé par le fait que** l'électrode (30, 31, 32) à présence minimale est disposée parallèlement à la surface de contact (10).

4. Boulon d'arrêt (1) selon la revendication 2 ou 3, **caractérisé par le fait que** le dispositif de détection (51) compte au moins deux électrodes (30, 31, 32).

5. Boulon d'arrêt (1) selon la revendication 2 ou 3, **caractérisé par le fait que** le dispositif de détection (51) compte au moins trois électrodes (30, 31, 32).

6. Boulon d'arrêt (1) selon la revendication 1, **caractérisé par le fait que** le dispositif de détection (51) est conçu pour une mesure inductive, et inclut au moins une bobine (60).

7. Boulon d'arrêt (1) selon la revendication 6, **caractérisé par le fait que** la bobine (60) est disposée, par son axe (SA), perpendiculairement à la surface de contact (10).

8. Boulon d'arrêt (1) selon l'une des revendications précédentes, **caractérisé par le fait que** l'élément (2) formant douille est réalisé en métal, notamment en un métal ferromagnétique, au moins dans une région proche de la surface complémentaire (11) ou englobant cette dernière.

9. Boulon d'arrêt (1) selon l'une des revendications précédentes, **caractérisé par le fait que** le dispositif (26) de stockage d'énergie est réalisé sous la forme d'une batterie remplaçable ; et **par le fait que** l'élément de préhension (6) est doté d'un couvercle amovible (71) fixé audit élément de préhension (6), ladite batterie étant accessible, en vue d'un remplacement, à l'état déposé dudit couvercle (71).

10. Boulon d'arrêt (1) selon la revendication 9, **caractérisé par le fait que** le couvercle (71) est fixé à l'élément de préhension (6) par un mécanisme de clipsage.

11. Boulon d'arrêt (1) selon l'une des revendications précédentes, **caractérisé par le fait que** la surface de contact (10) et la surface complémentaire (11) sont ménagées perpendiculairement à la direction axiale (VA) dans laquelle l'élément fonctionnel (4) peut être déplacé par rapport à l'élément (2) formant douille.

12. Boulon d'arrêt (1) selon l'une des revendications précédentes, **caractérisé par le fait que** l'information relative au signal de mesure est une information binaire.

13. Boulon d'arrêt (1) selon l'une des revendications précédentes, **caractérisé par le fait que** le dispositif de transmission (50) est conçu, en outre, pour le transfert sans fil d'une information relative à un état de charge du dispositif (26) de stockage d'énergie.

14. Boulon d'arrêt (1) selon l'une des revendications précédentes, **caractérisé par le fait que** l'ensemble de mesure (20) inclut, par ailleurs, au moins un élément d'affichage optique (27), en particulier une DEL (27a) permettant d'afficher une information relative au signal de mesure, notamment une information binaire relative audit signal de mesure.

15. Boulon d'arrêt (1) selon la revendication 14, **caractérisé par le fait que** l'élément d'affichage optique (27), à présence minimale, permet également d'afficher un état de charge du dispositif (26) de stockage d'énergie.
